# EUROPEAN PATENT APPLICATION

(11) **EP 2 299 159 A2**
(43) Date of publication of application: **23.03.2011**
(21) Application number: 10175365.5
(22) Date of filing: 06.09.2010
(51) Int. Cl.: F16N 1/00

(54) **Method for monitoring the condition of a gearbox and a corresponding arrangement**

(30) Priority: 07.09.2009 FI 20095916
(71) Applicant: Moventas Oy, 40100 Jyväskylä (FI)
(72) Inventor: Kleemola, Jaakko, 40500 Jyväskylä (FI)
(74) Representative: Helke, Kimmo Kalervo

(57) **Abstract**

The invention relates to a method for assessing the lubrication conditions of the mesh (17) between two gears (10, 12), in which gearbox (25) a shaft (11, 13) and bearings (14, 16, 15, 18) are attached to the said gears (10, 12), and in which method the resistance acting through the lubricant film in the gearbox (25) is measured by inducing a difference in voltage in the said gears (10, 12).

At least one of the said gears (10, 12) is insulated electrically from the casing (50) of the gearbox (25).

## Description

The present invention relates to a method, according to the preamble of Claim 1, for monitoring the condition of a gearbox. The invention also relates to an arrangement, according to the preamble of Claim 9, for monitoring the condition of a gearbox.

The lubrication of the gears has a great effect on the operating life and friction of gearboxes. Lubrication is intended to prevent/reduce the contact between the surface roughness of gears, with the aid of a lubricant film. As the circumferential speed of the gears increases, a lubricant film forms between the surfaces of the gears. By examining changes in the thickness of the lubricant film, the lubrication situation prevailing in the tooth contact can be studied.

In an article, Lord et al. have dealt scientifically with a method for measuring the thickness of a lubricant film. The article only deals with the matter scientifically and lacks a description of a practical method.

Application publications SU 1527537 A1 and SU 476438 A1 are known from the prior art, both of which disclose a laborious and complicated method for studying the gears of a gearbox, in which the gearbox is stopped on several occasions in connection with the testing. The method is not suitable for the continuous testing of a gearbox.

The relative thickness of a lubricant film can be measured by leading a small current to the shafts of the gears and measuring the resistance of the circuit. The electric current is small in magnitude and does not damage the bearings. However, the electric current may also travel through the bearings, and thus disturb the measurement.

The method and arrangement according to the present invention are intended to create a better method and arrangement than previously for monitoring the condition of a gearbox. More specifically, the method according to the invention is characterized by what is stated in the accompanying Claim 1. The arrangement according to the invention is characterized by what is stated in the accompanying Claim 9.

This objective can be achieved using the method according to the invention by insulating at least one gear electrically from the gearbox casing, in which case an electric current led to the insulated shaft will run in its entirety through the mesh between the gears. A clutch, which insulates the shaft and prevents the electric current from escaping along the shaft, is attached to the insulated shaft. In a gearbox, the gears are attached to shafts, which shafts are carried by at least one bearing. In the method, the resistance acting through the lubricant film is measured by creating a voltage difference between the gears on each side of the lubricant film.

Preferably, at least one circumferential surface of at least one gear shaft/bearing includes an aluminium-oxide layer as an insulator. The aluminium-oxide layer insulates the shafts and bearings from the casing. In that case, no electric current is conducted through the bearings to the casing, which makes the measuring method possible.

According to one embodiment, the shaft comprises a clutch, in which there is electrical insulation. Thus, electrical current also cannot flow through the clutch to the gearbox casing.

The electric current can be led to the insulated shaft using a carbon brush. There can be inductive and/or capacitive transmission between the rotating elements, for the transfer of electrical energy and/or data. Direct current, the maximum level of which remains constant, is preferably used in the measurement.

According to one embodiment, data transfer from the resistance measurement takes place wirelessly. Thanks to the wireless data transfer, monitoring can take place as remote monitoring, which is especially advantageous if the gearbox is used, for example, in a wind power plant located at sea.

Advantageously, by means of the method according to the invention, the lubricating conditions of a gearbox can be assessed as a continuous operation, as the gearbox rotates. This means that the object using the gearbox, for example, a wind power plant, need not be stopped for the duration of the measurement.

An essential feature of the arrangement according to the invention for monitoring the condition of a gearbox is that at least one gear is insulated electrically from the gearbox casing. In the gearbox being monitored, there are gears attached to shafts, at least one bearing arranged to carry the shafts, and a mesh between two gears. The arrangement includes a power source for producing an essentially small electric current between the gears, at least two carbon brushes for leading an electric current to the shafts, resistance measurement installed between the carbon brushes for measuring the resistance of the gearbox, and a computer for analysing the results of the resistance measurement and displaying them to the operator.

According to one embodiment, in the arrangement at least one circumferential surface of the shaft or bearing of at least one gear includes an aluminium-oxide layer as an insulator, which prevents the electric current from escaping along the shaft.

According to one embodiment, the shafts in the arrangement include a clutch, which has electrical insulation. This prevents the electric current from escaping along the shaft. The arrangement can include a carbon brush for conducting an electric current to an insulated shaft. According to one embodiment, the arrangement includes a direct current source.

The arrangement can include wireless means for transferring data from the resistance measurement and inductive and/or capacitive links for the transfer of electrical energy and/or data traffic between the rotating elements. With the aid of wireless data transfer, monitoring can be performed at a freely selectable location.

The method to which the invention relates can be used, for example, in the testing of gearboxes in connection with startup, in which case lubrication malfunctions can be detected immediately at the start of operation. By means of the method according to the invention, gearbox wear can be monitored immediately from the startup of the gearbox.

In the following, the invention is described in detail with reference to the accompanying drawings depicting some embodiments of the invention, in which
- Figure 1: shows a schematic diagram of the method according to the invention, in which the components belonging to the apparatus are shown,
- Figure 2: shows a general view of the apparatus used for test- ing the method according to the invention, and
- Figure 3: shows the resistance value obtained from the measure- ment according to the invention, as well as the mean value of the resistance as a function of time.

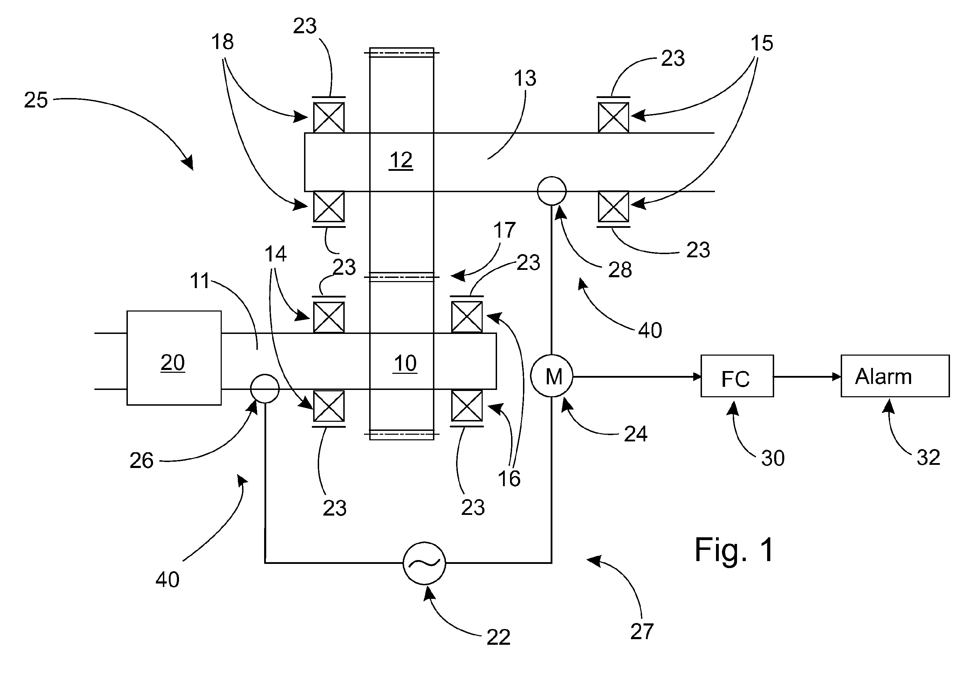

Figure 1 shows as a schematic diagram the arrangement used in the method, for assessing the lubrication conditions of the mesh 17 between two gears 10 and 12 in a gearbox 25. The gearbox 25 includes the gears 10 and 12. The gear 10 is attached to the shaft 11 and the gear 12 to the shaft 13. The shaft 13 is supported on bearings 18 and 15 and the shaft 11 on bearings 14 and 16. The shaft 11 is insulated from the casing 50 with the aid of the bearings 14 and 16, which are coated with an insulator layer 23. Aluminium oxide, or some other corresponding coating material is used as the coating layer.

For resistance measurement 24, the shaft 13 has the same potential as the gearbox casing 50, and the shaft 11 is insulated by a clutch 20, in which there is electrical insulation. The clutch can be a conventional dog clutch, or, in a wind turbine application, a composite clutch, of the type used nowadays in turbines, can be used. Thus, the electric current can travel only through the lubricated contact of the mesh 17. The small electric current produced by the power source 22 is preferably led through a carbon brush 26 to the shaft 11, so that the electric current is led through the contact of the mesh 17 between the gears 10 and 12 to the shaft 13 and from there to a carbon brush 28. The electric current required by the circuit can be produced by means of inductive and/or capacitive transfer between the rotating elements. Resistance measurement, which measures the resistance between the carbon brushes 26 and 28 and transmits the measurement data wirelessly to a computer 30, with the aid of wireless means belonging to the arrangement can be attached to the circuit 27. The computer 30 averages the resistance values received at specific intervals and, if the average value drops below an alarm limit, the computer 30 sends a signal to an alarm 32. Alternatively, wireless data transfer can be used in the various stages of the transfer of the measurement data. The lubrication conditions are preferably monitored continuously as the gearbox rotates. This is important in practice, as, in continuous monitoring, the electrical production of a wind power plant need not be interrupted. In the digital arrangement according to the invention, continuous measurement refers to continuous measurement and/or sampling at a specific frequency.

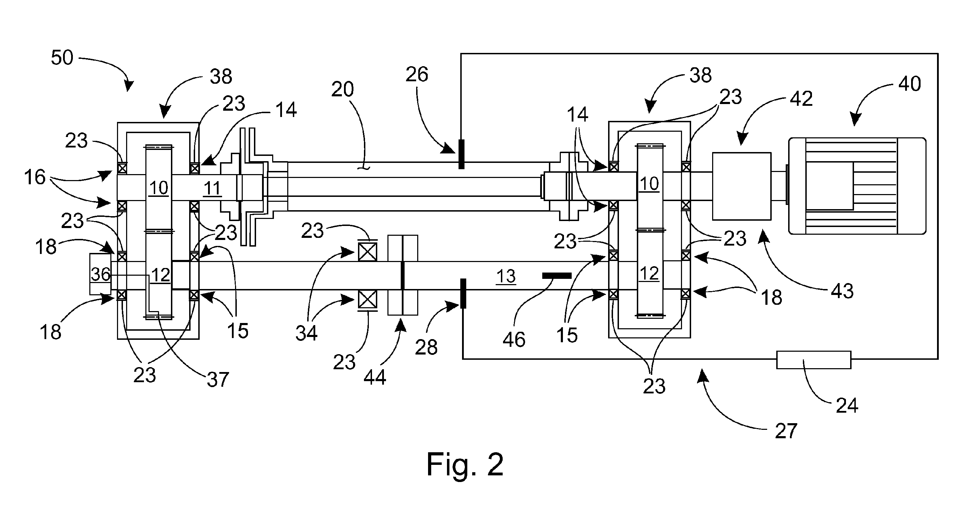

Figure 2 shows a general view of one embodiment of the arrangement according to the invention, for testing a gearbox. The loading of the gears 10 and 12 located in the gearboxes 38 is adjusted with the aid of a torque limiter 44. The torque acting on the shafts 11 and 13 through the clutch 42 of the motor 41 is measured by a measurement 46, and the internal friction torque of the entire transmission is measured by torque measurement 43 located in connection with the clutch 42. The internal temperature of the gear 12 is measured using a thermocouple 37, the information of which is collected in a telemetry device 36. A so-called K-thermowire, for example, can be used as the thermocouple.

The gearbox's bearings 14 and 16 are insulated by insulators 23, which are made from aluminium dioxide. 20NiCrMo2-2 steel, or a similar material suitable for the purpose, can be used as the material of the gears 10 and 12. The teeth of the gears are ground and polished to a mirror finish with a surface roughness of Ra 0,05 µm. In the current circuit 27, 1 V, 5 mA direct current can be used, the magnitude of which is measured at intervals of 1 ms. In direct current, the maximum level always remains constant. For this purpose, the arrangement can include a direct current source. Alternatively, the circuit 27 can use alternating current, and even high-frequency alternating current, the use of which permits the measurement of capacitance.

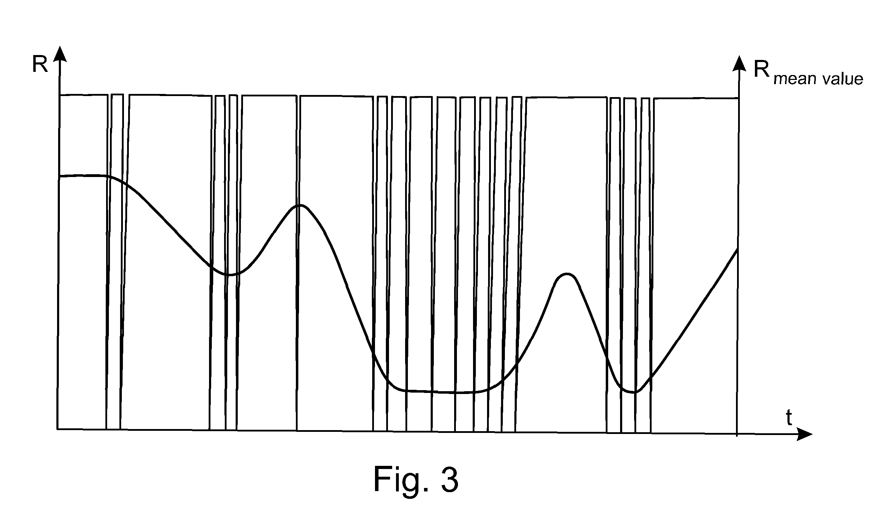

Figure 3 shows the measurement results of a resistance and its mean, obtained from the resistance measurement 24 by means of the method according to the invention, shown as a function of time. When the lubricant film protecting the gears 10 and 12 prevents surface roughnesses from making contact, the resistance value is at its maximum. If the surfaces of the gears 10 and 12 come into contact with each other, the resistance value drops to zero. When the thickness of the lubricant film again increases to normal, the resistance value also returns to its maximum level. The mean value of the resistance is calculated at regular intervals, so that, by monitoring the mean value, the general development of the lubricant level can be monitored. When the mean resistance value drops below a set minimum, the computer 30 sends a signal to the alarm 32. The measurement results are transferred from the resistance measurement 24 to the computer 30.

The method and arrangement according to the invention can be used for testing and monitoring various kinds of gearbox. Such gearboxes can be, for example, gearboxes of wind power plants and other gearboxes of a corresponding size class, though the method according to the invention can also be used in connection with smaller gearboxes.

According to one preferred embodiment, the monitoring of the condition of a gearbox includes a current source 22, at least two carbon brushes 26 and 28, resistance measurement 24, and a computer 30. An essentially small electric current is produced between the gears 10 and 12, by means of the current source 22. With the aid of the transfer elements 40, i.e. preferably the carbon brushes 26 and 28, the electric current is led to the shafts 11 and 13. The resistance measurement 24 is installed between the carbon brushes 26 and 28, in order to measure the resistance of the gearbox 25, and a computer 30 for analysing the results of the resistance measurements and displaying them to the operator. At least one gear 10 or 12 is insulated electrically from the casing 50 of the gearbox, with the aid of bearings 14 or 16. Thus, the electric current is forced to travel through the mesh 17 between the gears 10 and 12. The gearbox 25 being monitored using the arrangement includes gears 10 and 12 attached to shafts 11 and 13, at least one bearing 14, 16, 15 or 18, arranged to carry the shafts 11 or 13, and a mesh 17 between the two gears 10 and 12. In this connection, the definition an essentially small electric current refers to the fact that the electric current is only a fraction of the measurement electric currents used in methods and arrangements according to the prior art.

In the arrangement, at least one circumferential surface of one gear 10 or 12, shaft 11 or 13, or bearing 14, 16, 15, or 18, preferably includes an aluminium-oxide layer as an insulator 23.

## Claims

1. Method for monitoring the condition of a gearbox, in order to assess the lubrication conditions of the mesh (17) between two gears (10, 12), in which gearbox (25) a shaft (11, 13) and bearings (14, 16, 15, 18) are attached to the said gears (10, 12), and in which method the resistance acting through the lubricant film in the gearbox (25) is measured by inducing a difference in voltage in the said gears (10, 12) on each side of the lubricant film, **characterized in that** at least one of the said gears (10, 12) is insulated electrically from the casing (50) of the gearbox (25).

2. Method according to Claim 1, **characterized in that** at least one circumferential surface of at least one shaft (11, 13) or bearing (14, 16, 15, 18), of the said gear (10, 12), includes an aluminium-oxide layer as an insulator (23).

3. Method according to Claim 1 or 2, **characterized in that** the said shaft (11, 13) comprises a clutch (20), in which there is electrical insulation.

4. Method according to any of Claims 1 - 3, **characterized in that** electric current is led to the insulated shaft (11) by a carbon brush (26).

5. Method according to any of Claims 1 - 4, **characterized in that** direct current is used in the measurement.

6. Method according to any of Claims 1 - 5, **characterized in that** data transfer from the resistance measurement (24) takes place wirelessly.

7. Method according to Claim 6, **characterized in that** there is inductive and/or capacitive transfer between the rotating elements (10, 12, 11, 13) for the transmission of electrical energy and/or data traffic.

8. Method according to any of Claim 1 - 7, **characterized in that** the lubrication conditions are assessed as a continuous operation as the gearbox rotates.

9. System in monitoring a gearbox, in which gearbox (25) there are
- gears (10, 12) attached to shafts (11, 13),
- at least one bearing (14, 16, 15, 18) arranged to carry the shafts (11, 13),
- a mesh (17) between the two said gears (10, 12), and which arrangement includes
- a power supply (22) for producing an essential small electric current between the gears (10, 12),
- at least two transfer elements (40) for leading the electric current to the shafts (11, 13),
- resistance measurement (24) installed between the said transfer elements (40), in order to measure the resistance of the gearbox (25), and
- a computer (30) for analyzing the results of the resistance measurement and displaying them to the operator,
**characterized in that** the gearbox includes an insulator, which is arranged to insulate at least one of the said gears (10, 12) electrically from the casing (50) of the gearbox (25).

10. Arrangement according to Claim 9, **characterized in that** at least one circumferential surface of at least one shaft (11, 13) or bearing (14, 16, 15, 18), of the said gear (10, 12), includes an aluminium-dioxide layer as an insulator (23).

11. Arrangement according to Claim 9 or 10, **characterized in that**, in the arrangement, a shaft (11, 13) includes a clutch (20), in which there is electrical insulation.

12. Arrangement according to any of Claims 9 - 11, **characterized in that** the arrangement includes a carbon brush (26) for leading electric current to the insulated shaft (11).

13. Arrangement according to any of Claims 9 - 12, **characterized in that** the current source (22) is a direct current source.

14. Arrangement according to any of Claims 9 - 13, **characterized in that** the arrangement includes wireless means for transferring information from the resistance measurement (24).

15. Arrangement according to Claim 14, **characterized in that** the arrangement includes inductive and/or capacitive transfers for the transmission of electrical energy and/or data transfer between the rotating elements (10, 12, 11, 13).
